# EUROPEAN PATENT SPECIFICATION

(11) **EP 2 944 238 B1**
(45) Date of publication and mention of the grant of the patent: **02.08.2017**
(21) Application number: 15166973.6
(22) Date of filing: 08.05.2015
(51) Int. Cl.: A47J 31/44

(54) **Coffee machine configured for transmitting data to a receiving device**
Kaffeemaschine konfiguriert zur Datenübertragung an eine Empfangseinrichtung
Machine à café configurée pour transmettre des données à un dispositif de réception

(30) Priority: 12.05.2014 IT MI20140858
(43) Date of publication of application: 18.11.2015
(73) Proprietor: De'Longhi Appliances S.r.l., 31100 Treviso (IT)
(72) Inventor: De' Longhi, Giuseppe, 31100 TREVISO (IT); Zottarel, Andrea, 30027 SAN DONA' DI PIAVE (VENEZIA) (IT)
(74) Representative: Rapisardi, Mariacristina

(56) References cited:
- EP-A1- 1 992 263
- EP-A1- 2 085 000
- WO-A1-2007/003062
- WO-A1-2011/054889
- DE-A1-102012 109 982
- US-A1- 2003 129 286

## Description

The present invention refers to a coffee machine configured for transmitting data to a receiving device.

Some coffee machines commercially available today have an electronic interface to which a computer cable can be connected for a two-way exchange of data.

The data received by the computer can be sent from the computer to a service centre available on the WEB for diagnostic purposes.

This communication system limits the possibility of human error in communicating correct diagnostic information to a service centre available on the WEB so that the service centre can provide a solution to the problem. WO2007/003062 shows in a coffee maker a display acting as graphic interface for inputting data through a voice signal.

Also EP1992263 shows in a coffee maker a display acting as graphic interface for inputting data. EP1992263 teaches the use of LEDs just to identify the level of filling.

WO2011/054889 and DE102012109982 relate to coffee makers that communicate with mobile phones. In these documents though the communication runs either via acoustic signals or near field communications such as NFC, Bluetooth or Wi-Fi.

US2003/129286 discloses the use of a barcode to program a coffee maker.

EP2085000 relates to a coffee maker having an external networking interface. The technical task of the present invention is to realize a coffee machine that offers improved functionality in transmitting at least one datum to a receiving device.

Within the scope of this technical task, one object of the invention is to provide a coffee machine adapted to interact in a more convenient, effective, safe, accurate and reliable manner with a receiving device.

The technical task, as well as the latter and additional aims, according to the present invention, are achieved by realizing a coffee machine as defined in claim 1. The two-way exchange of data between the coffee machine and the receiving device, and between the latter and a WEB service provider, may serve diagnostic and/or strictly commercial purposes. The transmission unit is configured to transmit the encoded datum as a visible light signal. The datum is encoded as a dynamic signal of a given duration that can be processed in a progressively visible manner until final completion by the transmission unit. The signal is defined by a time sequence of changes in the status of the transmission unit.

It should be stressed that the datum is not identified by a single status of the transmission unit, but only by the composition of the complete sequence of statuses taken on by the transmission unit.

In other words, no significance is attributable to a single status of the transmission unit extrapolated from the sequence.

The present invention also discloses a combination of a coffee machine such as this with a mobile telephone device having at least one acquisition unit for acquisition of said signal, at least one decoding unit for decoding said signal, and at least one display unit for displaying the decoded datum.

Lastly, the present invention discloses a method for transmitting at least one datum from a coffee machine to a receiving device having an optical acquisition unit for acquisition of the datum, characterized in that said coffee machine encodes the datum as a visible dynamic signal of a given duration, and processes the dynamic signal in a progressively visible manner until final completion, and the optical acquisition unit of the receiving device is activated at least for the entire duration of the process of processing the dynamic signal by the coffee machine in such a manner as to acquire the dynamic signal progressively until completion thereof as it is processed in a visible manner by the coffee machine.

Other characteristics of the present invention are also defined in the claims herein below.

Further characteristics and advantages of the invention will become more apparent from the description of some preferred, but not exclusive, embodiments of a coffee machine configured to transmit data to a receiving device according to the invention, and illustrated by way of approximate and non-limiting example in the attached drawings, of which;

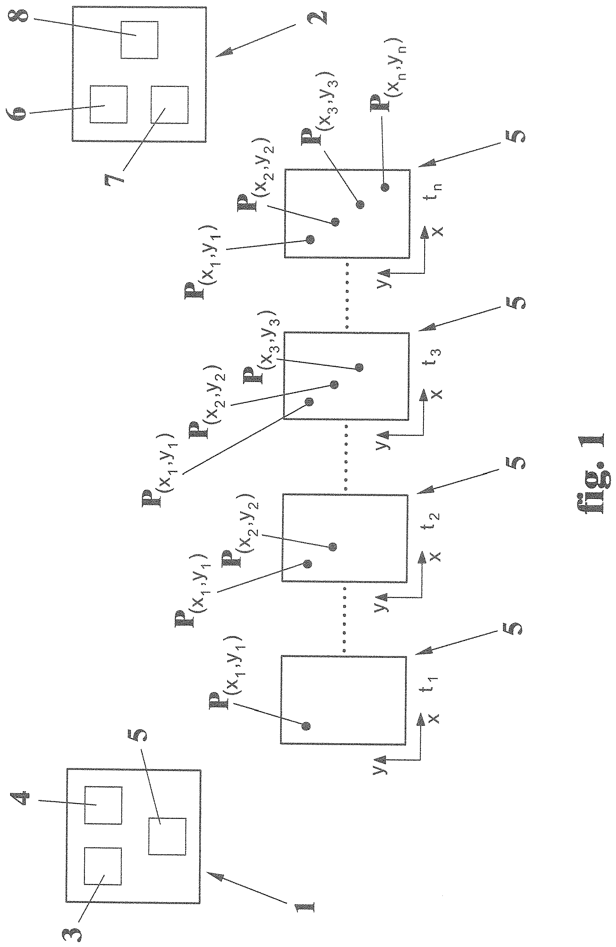

Figure 1 shows the scheme for transmission of a datum from the coffee machine to the mobile telephone device, in accordance with a first, preferred embodiment in which the transmission unit comprises a display; and

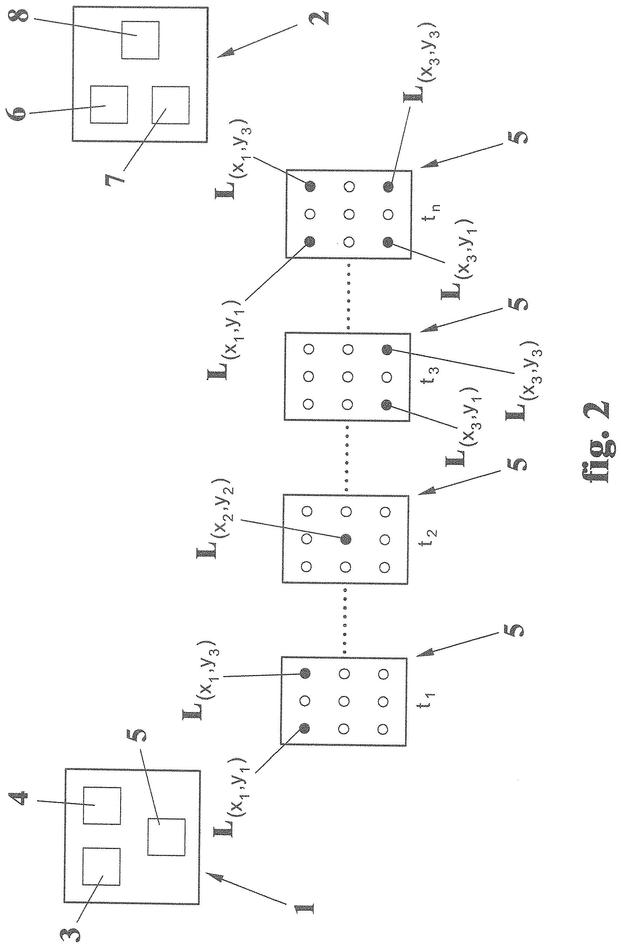

Figure 2 shows the scheme for transmission of a datum from the coffee machine to the mobile telephone device, in accordance with a second, preferred embodiment in which the transmission unit comprises a series of LED light emitters; Equivalent parts are indicated in the description using the same reference number. The coffee machine 1, which is configured to transmit data to a receiving device 2,
comprises a storage unit 3, a data encoding unit 4 for forming encoded data that can be stored in the storage unit 3, and at least one transmission unit 5 configured to process the encoded data in a visible manner.

The receiving device 2 is equipped with an optical acquisition unit 6, a decoding unit 7 and a display unit 8.

The receiving device 2 preferably consists of a mobile telephone device, for example a smartphone. In this case in particular, the optical acquisition unit 6 is constituted by the smartphone camera, the decoding unit 7 is constituted by a software function implemented or installed in the smartphone and the display unit 8 is constituted by the smartphone display.

As regards the coffee machine 1, the storage unit 3 can consist particularly in the memory of the microcontroller or the memory of the printed circuit board normally provided in a coffee machine.

The data stored in the memory may concern usage statistics for the machine, malfunction diagnostics, settings of operating parameters and default settings, etc.

The encoding unit 4 can be represented by the coffee machine's internal software, such software being suitable for encoding each individual datum as a visible dynamic signal S that can be processed by the transmission unit 5.

The signal S is advantageously defined by a time sequence of changes in the status of the transmission unit 5.

The dynamic signal S is therefore of a given duration, identifying a certain number of changes in the status of the transmission unit 5.

We shall first refer to the example illustrated in Figure 1, in which the transmission unit 5 comprises a display, and particularly the display normally provided in the user interface of some models of automatic coffee machines.

By P(x,y), we shall indicate the pixel with spatial coordinates x, y on the display.

The datum is encoded in the following manner: at time t1 the status of the display is defined by the switching on of pixel P(x1,y1) only; at time t2>t1 the status of the display is defined by the simultaneous switching on of pixels (P(x1, y1) and P(x2, y2); at time t3>t2 the status of the display is defined by the simultaneous switching on of pixels (P(x1, y1), P(x2, y2) and P(x3, y3); and at time tn>t3 the status of the display is defined by the simultaneous switching on of pixels P(x1, y1), P(x2, y2), P(x3, y3) and P(xn, yn).

Naturally, to facilitate recognition of the signal by the optical acquisition unit provided in the receiving device without requiring a very high resolution capacity on the part of the optical acquisition unit, it is preferable that the pixels, which switch on or off time and again, be sufficiently spaced with respect to each other so as to be precisely identified in a discrete manner. In this case, the various statuses of the display shall be identified each time by a point or by a plurality of discrete points that appear on the display in specific positions.

However, the sequence of changes in status may also be defined by the progressive switching on of contiguous pixels that progressively make up a specific graphic element defined by a line and/or by a continuous surface.

The datum is encoded in the complete sequence of time changes in the statuses of the display, the sequence being identified as P.

The encoded datum can contain a great deal of information, in that encoding of the datum can be correlated with a virtually unlimited number of variables, including for example the duration of the signal (and therefore the number of statuses of the display to be taken into consideration), the frequency of status changes, the variation in the frequency of status changes, the number of pixels that switch on and/or off with each change in status, the position of the pixels that switch on and/or off with each change in status, etc.

We shall now refer to the example illustrated in Figure 2, in which the transmission unit 5 comprises a series of LED light indicators, normally provided in the user interface of some models of automatic coffee machines.

Assuming that the light indicators are arranged in a matrix of rows and columns, we shall indicate the light indicator positioned at the xth row and yth column as L(x,y).

The datum is encoded in the following manner: at time t1 the status of the indicators is defined by the simultaneous switching on of indicators L(x1,y1) and L(x1,y3); at time t2>t1 the status of the indicators is defined by the switching on of indicator L(x2, y2) only; at time t3>t2 B the status of the indicators is defined by the simultaneous switching on of indicators L(x3, y1) and L(x3, y3); and at time tn>t3 the status of the indicators is defined by the simultaneous switching on of indicators L(x1,y1), L(x1, y3), L(x3, y1) and L(x3, y3).

The datum is encoded in the complete sequence of time changes in the statuses of the indicators.

The encoded datum can contain a great deal of information, in that encoding of the datum can be correlated with a virtually unlimited number of variables, including for example the duration of the signal (and therefore the number of statuses of the indicators to be taken into consideration), the frequency of status changes, the variation in the frequency of status changes, the number of indicators that switch on and/or off with each change in status, the position of the indicators that switch on and/or off with each change in status, the colour with which each indicator is lit, if the colour can be changed, etc.

Briefly, the following is an example of one possible mode of operation of the coffee machine.

The control unit of the coffee machine 1 detects a malfunction and records the relative datum in its storage unit 3 and the datum is then taken and coded by the encoding unit 4.As the signal S is dynamic, its duration is pre-established and it is thus reproduced progressively over time by the transmission unit 5 and acquired progressively over time by the optical acquisition unit 6.It is therefore necessary that the transmission unit 5 periodically reproduce the signal S so as to allow time for the user to prepare the receiving device 2 to proceed with the complete acquisition of the dynamic signal S for the entire duration of the latter.

In the receiving device 2, once the signal S has been acquired by the optical acquisition unit 6, it is decoded by the decoding unit 7 and the decoded datum is thereby reproduced in the display unit 8, where it proves to be visible and comprehensible to the user.

Naturally, the receiving device 2 can also comprise suitable means, for example resident software, capable of generating an automatic sending of the encoded signal to a pre-established address, particularly the address of a customer service centre. By way of example, such means includes the encoded signal in an SMS message sent to a pre-established telephone number or in an email message sent to a pre-established WEB address.

Thus conceived, the coffee machine configured for transmitting at least one datum to a receiving device is susceptible to numerous modifications and variants, all of which falling within the scope of the claims.

## Claims

1. A coffee machine (1) configured for transmitting at least one datum to a receiving device (2), said coffee machine (1) comprising at least one storage unit (3), at least one encoding unit (4) for encoding the datum to form an encoded datum that can be stored in the memory unit (3), and at least one transmission unit (5) for transmitting the datum, said transmission unit (5) being configured for wireless transmission, **characterized in that** said transmission unit (5) is configured to transmit said encoded datum as a visible light signal (S), said datum being encoded as a dynamic signal (S) of a given duration that can be processed in a progressively visible manner until final completion by said transmission unit (5), said signal (S) being defined by a time sequence of changes in the status of said transmission unit, said transmission unit (5) comprising at least one display and/or a plurality of sources of LED light.

2. The coffee machine (1) according to claim 1, **characterized in that** the status of said transmission unit (5) is defined by the selective on/off status of each pixel making up the display.

3. The coffee machine (1) according to claim 1, **characterized in that** the status of said transmission unit (5) is defined at least by the selective on/off status of each source of said plurality of sources of LED light.

4. The coffee machine (1) according to the preceding claim, **characterized in that** the status of said transmission unit (5) is also defined by the colour with which each source of said plurality of sources of LED light is lit.

5. A combination of a coffee machine (1) according to one or more of the preceding claims and a mobile telephone device (2) having at least one acquisition unit (6) for acquisition of said signal (S), at least one decoding unit (7) for decoding said signal (S), and at least one display unit for displaying the decoded datum.

6. A method for transmitting at least one datum from a coffee machine (1) to a receiving device (2) having an optical acquisition unit (6) for acquisition of the datum, **characterized in that** said coffee machine (1) encodes the datum as a visible dynamic signal (S) of a given duration, and processes the dynamic signal (S) in a progressively visible manner until final completion, and the optical acquisition unit (6) of the receiving device (2) is activated at least for the entire duration of the process of processing the dynamic signal (S) by the coffee machine (1) in such a manner as to acquire the dynamic signal (S) progressively until completion thereof as it is processed in a visible manner by the coffee machine (1).

## Patentansprüche

1. Kaffeemaschine (1), die zur Übertragung mindestens eines Datums an eine Empfangseinrichtung (2) konfiguriert ist, wobei die Kaffeemaschine (1) mindestens eine Speichereinheit (3), mindestens eine Codiereinheit (4) zum Codieren des Datums umfasst, um ein codiertes Datum zu bilden, das in der Speichereinheit (3) gespeichert werden kann, und mindestens eine Übertragungseinheit (5) zur Übertragung des Datums, wobei die Übertragungseinheit (5) für eine drahtlose Übertragung konfiguriert ist, **dadurch gekennzeichnet, dass** die Übertragungseinheit (5) so konfiguriert ist, dass sie das codierte Datum als ein sichtbares Lichtsignal (S) überträgt, wobei das Datum als ein dynamisches Signal (S) einer angegebenen Dauer codiert wird, das in einer progressiv sichtbaren Weise bis zum endgültigen Abschluss durch die Übertragungseinheit (5) bearbeitet werden kann, wobei das Signal (S) durch eine zeitliche Abfolge von Änderungen des Status der Übertragungseinheit definiert wird, wobei die Übertragungseinheit (5) mindestens eine Anzeige und/oder eine Vielzahl von LED-Lichtquellen umfasst.

2. Kaffeemaschine (1) nach Anspruch 1, **dadurch gekennzeichnet, dass** der Zustand der Übertragungseinheit (5) durch den selektiven Ein/Aus-Zustand jedes Pixels, das die Anzeige bildet, definiert wird.

3. Kaffeemaschine (1) nach Anspruch 1, **dadurch gekennzeichnet, dass** der Zustand der Übertragungseinheit (5) mindestens durch den selektiven Ein/Aus-Zustand jeder Quelle der Vielzahl von LED-Lichtquellen definiert wird.

4. Kaffeemaschine (1) nach dem vorhergehenden Anspruch, **dadurch gekennzeichnet, dass** der Zustand der Übertragungseinheit (5) auch durch die Farbe definiert wird, mit der jede Quelle der Vielzahl von LED-Lichtquellen leuchtet.

5. Kombination einer Kaffeemaschine (1) nach einem oder mehreren der vorhergehenden Ansprüche und einer Mobiltelefonvorrichtung (2) aufweisend mindestens eine Erfassungseinheit (6) zur Erfassung des Signals (S), mindestens eine Decodierungseinheit (7) zum Decodieren des Signals (S) und mindestens eine Anzeigeeinheit zum Anzeigen des decodierten Datums.

6. Verfahren zur Übertragung mindestens eines Datums von einer Kaffeemaschine (1) zu einer Empfangseinrichtung (2) mit einer optischen Erfassungseinheit (6) zur Erfassung des Datums, **dadurch gekennzeichnet, dass** die Kaffeemaschine (1) das Datum als sichtbares dynamisches Signal (S) einer angegebenen Dauer codiert und das dynamische Signal (S) bis zum endgültigen Abschluss in einer progressiv sichtbaren Weise bearbeitet, und die optische Erfassungseinheit (6) der Empfangseinrichtung (2) wird mindestens für die gesamte Dauer des Prozesses der Bearbeitung des dynamischen Signals (S) durch die Kaffeemaschine (1) auf eine Weise aktiviert, dass das dynamische Signal (S) progressiv bis zum Abschluss desselben erfasst wird, da es von der Kaffeemaschine (1) in sichtbarer Weise bearbeitet wird.

## Revendications

1. Machine à café (1) configurée pour transmettre au moins une donnée à un dispositif de réception (2), ladite machine à café (1) comprenant au moins une unité de mémoire (3), au moins une unité d'encodage (4) pour coder la donnée pour former une donnée codée pouvant être mémorisée dans l'unité de mémoire (3), et au moins une unité de transmission (5) pour transmettre la donnée, ladite unité de transmission (5) étant configurée pour une transmission sans fil, **caractérisée en ce que** ladite unité de transmission (5) est configurée pour transmettre ladite donnée codée comme étant un signal optique visible (S), ladite donnée étant codée comme étant un signal dynamique (S) d'une durée déterminée pouvant être traité d'une façon progressivement visible jusqu'à l'exécution définitive par ladite unité de transmission (5), ledit signal (S) étant défini par une séquence temporelle de modifications dans l'état de de ladite unité de transmission, ladite unité de transmission (5) comprenant au moins un écran et/ou une pluralité de sources de lumière à DEL.

2. Machine à café (1) selon la revendication 1, **caractérisée en ce que** l'état de ladite unité de transmission (5) est défini par l'état sélectif on/off de chaque pixel composant l'écran.

3. Machine à café (1) selon la revendication 1, **caractérisée en ce que** l'état de ladite unité de transmission (5) est défini au moins par l'état sélectif on/off de chaque source de ladite pluralité de sources de lumière à DEL.

4. Machine à café (1) selon la revendication précédente, **caractérisée en ce que** l'état de ladite unité de transmission (5) est aussi défini par la couleur avec laquelle chaque source de ladite pluralité de sources de lumière à DEL est allumée.

5. Combinaison d'une machine à café (1) selon l'une ou plusieurs des revendications précédentes et un appareil de téléphonie mobile (2) comportant au moins une unité d'acquisition (6) pour l'acquisition dudit signal (S), au moins une unité de décodage (7) servant à décoder ledit signal (S), et au moins une unité d'affichage pour afficher la donnée décodée.

6. Procédé de transmission d'au moins une donnée à partir d'une machine à café (1) à un dispositif de réception (2) comportant une unité d'acquisition optique (6) pour l'acquisition de la donnée, **caractérisé en ce que** ladite machine à café (1) code la donnée comme étant un signal dynamique visible (S) d'une durée prédéterminée, et traite le signal dynamique (S) d'une façon progressivement visible jusqu'à l'exécution définitive, et l'unité d'acquisition optique (6) du dispositif de réception (2) est activée au moins pendant toute la durée du processus de traitement du signal dynamique (S) par la machine à café (1) de manière à acquérir le signal dynamique (S) progressivement jusqu'à l'exécution puisque traité de manière visible par la machine à café (1).
